# NEW EUROPEAN PATENT SPECIFICATION

(11) **EP 0 552 510 B2**
(45) Date of publication and mention of the opposition decision: **05.01.2000**
(45) Mention of the grant of the patent: 29.05.1996
(21) Application number: 92204027.4
(22) Date of filing: 18.12.1992
(51) Int. Cl.: B27M 3/00, B29C 65/42, F16B 12/04, F16B 11/00

(54) **Method and device for manufacturing a panel and panel manufactured according to this method**
Verfahren und Vorrichtung zur Herstellung einer Platte und nach diesem Verfahren hergestellte Platte
Procédé et dispositif pour la fabrication d'un panneau et panneau fabriqué selon ce procédé

(30) Priority: 20.12.1991 BE 9101175
(43) Date of publication of application: 28.07.1993
(73) Proprietor: ZODIAC EUROPE S.A., L-2960 Luxembourg (LU)
(72) Inventor: van Erven, Waltherus Joseph Maria, NL-5042 KJ Tilburg (NL)
(74) Representative: Konings, Lucien Marie Cornelis Joseph

(56) References cited:
- WO-A-82/01847
- DE-A- 2 101 833
- DE-A- 2 438 113
- FR-A- 2 454 554
- GB-A- 2 218 483
- NL-A- 6 806 104
- US-A- 3 893 777

## Description

The invention relates to a method for producing panels according to the preamble of claim 1.

GB-A-2218483 discloses a method for assembling panels wherein at least two panel elements held substantially in the same plane are mutually connected with introduction of adhesive between their surfaces. Herein the end surfaces are mutually engaging, which means loss of panel length.

Known in the art is a method for producing plates of a determined length by:
starting from elements with undetermined lengths;
machining the faces to be interconnected, so that they engage into each other, mostly a central channel in the one face and a central ridge remaining on the other face (like GB-2218483);
combining the elements, so that they are held substantially in the same plane and that they enter into each other;
injecting adhesive between the facing surfaces; and
cutting plates with determined length from the produced band.

PCT 82/01847 discloses a method wherein plates of short and normal length are connected to each other for constituting a band and to subsequently cutt off plates with required length; and wherein plate ends are interconnected by joints where the plate ends do not overlap each other.

DE 2438113 discloses a method for interconnecting plate ends, wherein the plate ends do not overlap each other and wherein adhesive penetrates in both facing faces of said plate ends. The adhesive penetrates into the small holes between wood fibres. This publication proposes to apply pressure onto the plates, so that the plates to be interconnected are pressed against each other and are held under pressure during the curing period of the glue, which pressure would be the adequate feature for obtaining a good connection.

The invention has for its object to reduce the loss of panel length and still reaiize a good mutual adhesion. The method according to the invention is disclosed in claim 1.

The invention likewise relates to and provides a device for performing the method according to the invention as indicated in claim 7. The invention also provides new panels realized in accordance with the invented method.

NL-A-6806104 disdoses the mutual connection of two elements which are positioned in a mutual transverse direction, wherein said two elements are mutuaily connected with introduction of adhesive between their end surfaces, in each of both the surfaces to be joint, a plurality of anchoring recesses is arranged which extend from these surfaces to some depth into the wood. With the present invention, however, the recesses are mutually connected by means of at least one less deep connecting recess (34) arranged in at least one of both the surfaces (13) to be mutually facing, the said surfaces (13) are disposed mutually facing and an adhesive (17) is injected between these surfaces (13) and into the recesses (14).

The fact that according to the invention the anchoring recesses have mutually spaced connections with said at least one less deep connecting recess, results in an additional adherence surface of the panels between the anchoring recesses and results in a greater bending moment due to a greater moment arm length, which can provide a stronger bending rigidity.

The required dimension of the built construction according to NL-A-6806104 is obtained by interconnecting two elements which have their predetermined length prior to said mutual connection.

US-3893777 discloses the mutual join between two elements positioned in line in the same plane, wherein a recess is made in each of the opposing surfaces. The interconnection with such configuration is poor.

The invention will be better understood in the light of the description following hereinbelow with reference to the annexed drawings. In the drawings in schematic form:
Figure 1 shows a schematic side view of a preferred embodiment of the device according to the invention;
Figure 2 shows a section along line II-II of figure 1;
Figure 3 shows on a larger scale detail III of figure 1;
Figures 4-10 show variants of detail III;
Figure 11 shows on a larger scale detail XI of figure 10; and
Figure 12 shows on a smaller scale a cross section corresponding to figure 2 of an embodiment variant.

In the method according to the invention panel elements 2 are supplied as according to arrow 4 over a roller conveyor of a device 3 according to the invention to a mould 5 consisting of a lower mould 6, an upper mould 7 and two side moulds 8. At the position of mould 5 the panel elements 2 are mutually connected at a join 9 to form a continuous string of panels 10, from which panels 11 of a determined length are sawn off by means of a saw 12.

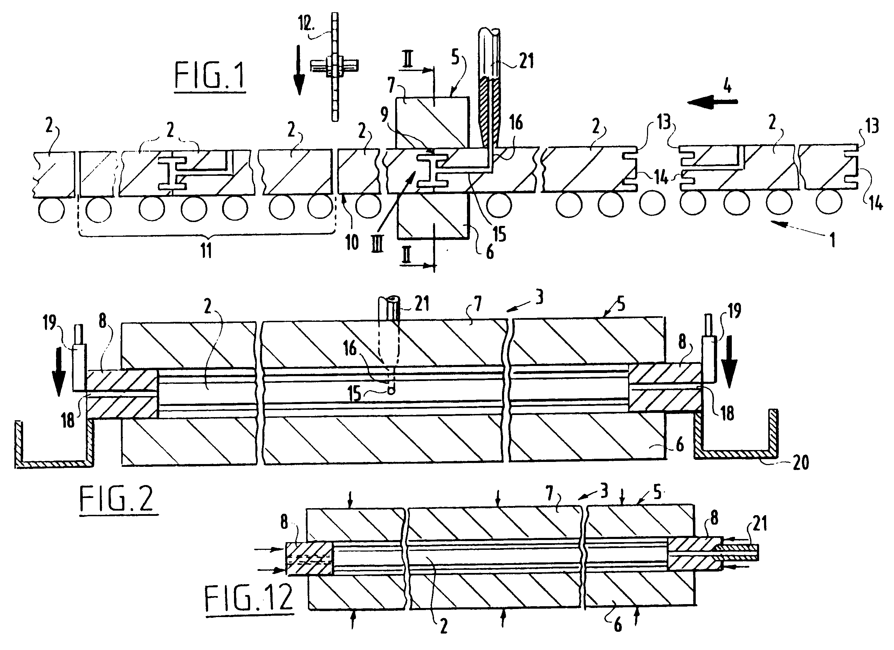

The panel elements 2 have recesses 14 arranged in advance in their end surfaces 13. Each recess has in figures 1-3 the half of a T-profile. A horizontal hole 15 is moreover bored from one of the recesses, which hole communicates with a vertical hole 16 to form an injection channel through which, when the mould 5 is closed, an adhesive 17 is injected from a nozzle 21 into the recesses 14. This adhesive 17 is a glue or a glue with a filler and consists for instance of polyurethane or polyamide which entirely fills both recesses 14 and passes to the outside via openings 18 which are closed by a valve 19 as soon as the filler adhesive flows outside. The escaped filler adhesive is collected in trays 20. After injection the filler adhesive 17 is given time, for instance 25 seconds, to solidify. It is conceivable for injection to take place through the mould parts 6 or 7, wherein an injection channel is then arranged opposite the nozzle 21. In preference injection takes place from a side through a lateral pressure plate 8, while the other pressure plate 8 has for example closable venting holes. After the filler adhesive 17 has solidified the mould is opened by moving apart the mould parts 6-8. A new join 9 for connection is then placed in the mould 5.

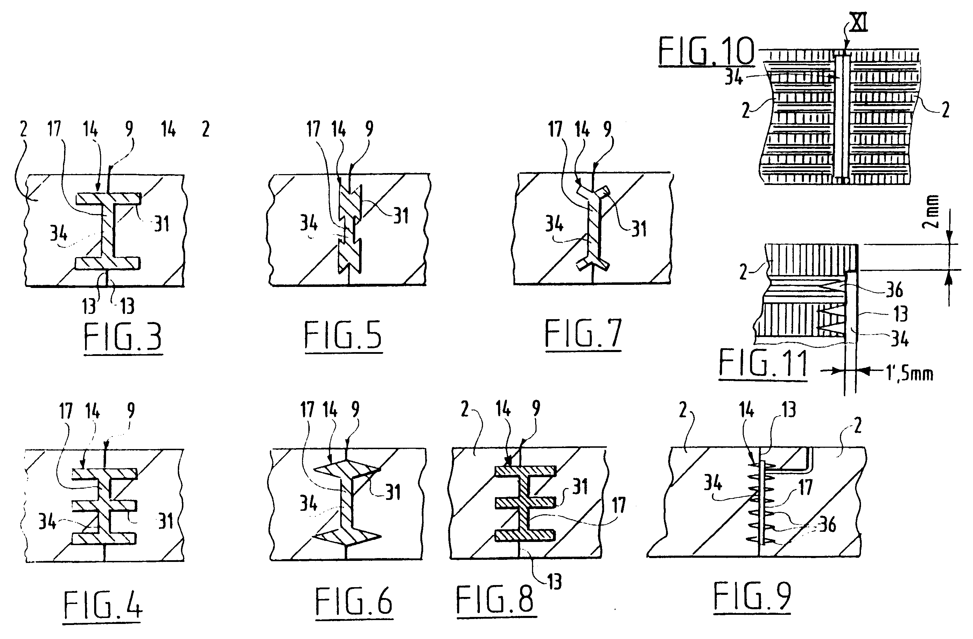

During solidifying of the filler adhesive 17 a panel 11 of the required length is sawn off in each case, for instance to form a draining board by applying a decorative veneer layer. Diverse profile shapes are conceivable for recesses 14, such as for instance those shown in figures 4-9. The joins 9 and the injection inlet are later sanded smooth.

The panel elements 2 are manufactured from wood, fibreboard or multi-ply.

In figures 3-9 the recess 14 consists of a number of narrow and quite deep anchoring recesses 31 arranged in each end surface 13 and mutually connected by a shallow, flat connecting recess 34 oriented substantially parallel to the end surfaces 13, which recess is present either in both panel elements 2 or only in one of the two. The recesses 31 of figures 3-8 are milled therein, while the large number of recesses 36 of figure 9 are pressed therein using tapering steel pins which are withdrawn therefrom after being pressed in. This may optionally take place by rolling a pin-holding roller with application pressure over the end surfaces 13.

The narrow tapering recesses 36 of figures 9 and 11 form together with the adhesive penetrating therein a large number of anchors. The adhesive penetrates excellently into these narrow protrusions because it is very fluid and is injected under high pressure, for instance of 100-200 bar or at least in this order of magnitude.

As shown in figures 10 and 11, a shallow, flat connecting cavity 34 is preferably recessed into each end surface 13 which is only 1-2, for instance 1.5 mm deep, while only a small distance of several millimetres, for example 2 mm, remains from the bottom and the top sides.

## Claims

1. Method for producing panels (11) with predetermined lengths, wherein a continuous string of panels (10) is produced by mutually connecting panel elements (2) at joins (9), wherein at least two panel elements (2) held substantially in the same plane are mutually connected with introduction of adhesive between their end surfaces (13), wherein in at least one of the surfaces (13) to be joint at least one anchoring recess (14) is arranged which extends from these surfaces to some depth into the wood and wherein the said surfaces (13) are disposed mutually facing and that an adhesive (17) is injected between these surfaces (13) and wherein panels (11) of a predetermined length are separated from said string of panels (10), **characterized in that** in each of both the surfaces (13) to be joint a plurality of anchoring recesses (14) is arranged which extend from these surfaces to some depth into the wood and which are mutually connected by means of at least one less deep connecting recess arranged in at least one of both the surfaces (13) to be mutually facing, and that an adhesive (17) is injected between these surfaces (13) and into the recesses (14), wherein said anchoring recesses (14) have mutually spaced connections with said at least one less deep connecting recess.

2. Method as claimed in claim 1, **characterized in that** in at least one of both the end surfaces (13) is arranged a shallow, flat connecting recess extending substantially parallel to the end surface.

3. Method as claimed in claim 1, **characterized in that** a substantially U-shaped recess (14) is arranged in each of both the end surfaces (13).

4. Method as claimed in claim 1 or 2, **characterized in that** a plurality of narrow recesses are pressed into the panel material from the head end sides by means of pens.

5. Method as claimed in claim 5, **characterized in that** a large number of recesses are pressed into the surfaces for connecting of the panel elements for connecting by means of at least one roller provided with pins.

6. Method as claimed in any of the foregoing claims, characterized in that the join (9) between the two panel elements (2) for connection is received in a mould (5) and that adjacently of the mould (5) filler adhesive (17) is injected into the join (9) via an injection channel (15, 16) bored beforehand into one of the panel elements (2).

7. Device for performing the method as claimed in any of the foregoing claims, comprising a conveyor line for panels (2) to be connected and for a string of connected panels, said conveyor line being provided with a mould (5) for receiving the join (9) between two panel elements (2) with mutually facing end surfaces (13) and with injecting means (21) for injecting filler adhesive (17) into the join (9) and comprising cutting means (12) for cutting panels with predetermined lengths from said string, **characterized by** recessing means for arranging in each of both the surfaces (13) to be joint a plurality of anchoring recesses (14) which extend from these surfaces to some depth into the wood and which are mutually connected by means of at least one less deep connecting recess arranged in at least one of both the surfaces (13) to be mutually facing, wherein said anchoring recesses (14) have mutually spaced connections with said at least one less deep connecting recess.

8. Panel (11) manufactured with use of the method of one or more of the foregoing claims 1-6, **characterized in that** it is composed of at least two panel parts, mutually interconnected by a join, wherein in each of both the mutually facing surfaces (13) of the join a plurality of anchoring recesses (14) is arranged which extend from these surfaces to some depth into the wood and which are mutually connected by means of at least one less deep connecting recess arranged in at least one of both the surfaces (13) mutually facing, and wherein an adhesive (17) is injected between these surfaces (13) and into the recesses (14), wherein said anchoring recesses (14) have mutually spaced connections with said at least one less deep connecting recess.

## Patentansprüche

1. Verfahren zur Herstellung von Platten (11) mit vorbestimmten Längen, wobei eine kontinuierliche Reihe von Platten (10) dadurch erzeugt wird, daß Plattenelemente (2) durch Verbindungen (9) miteinander verbunden werden, wobei wenigstens zwei Plattenelemente (2), die im wesentlichen in der gleichen Ebene gehalten werden, miteinander durch Einführen eines Klebers zwischen ihre Stirnseiten (13) verbunden werden, und wobei wenigstens eine der beiden miteinander zu verbindenden Stirnflächen (13) wenigstens eine Verankerungsausnehmung (14) aufweist, die sich von diesen Stirnflächen über eine gewisse Tiefe in das Holz hinein erstreckt, und wobei ein Kleber (17) zwischen diese Stirnflächen (13) eingespritzt wird, und wobei Platten (11) vorbestimmter Länge von der Plattenreihe (10) abgetrennt werden,
dadurch gekennzeichnet, daß in einer der beiden zu verbindenden Stirnflächen (13) mehrere Verankerungsausnehmungen (14) angeordnet sind, die sich von dieser Stirnfläche über eine gewisse Tiefe in das Holz hinein erstrecken und die miteinander durch wenigstens eine weniger tiefe Verbindungsausnehmung verbunden sind, die in wenigstens einer der beiden aufeinander hin gerichteten Stirnflächen (13) angeordnet ist, und daß ein Kleber (17) zwischen diese Stirnflächen (13) und in die Ausnehmungen (14) eingespritzt wird, wobei die Verankerungsausnehmungen (14) im gegenseitigen Abstand angeordnete Verbindungen mit der wenigstens einen weniger tiefen Verbindungsausnehmung aufweisen.

2. Verfahren nach Anspruch 1,
dadurch gekennzeichnet, daß in wenigstens einer Stirnfläche oder in beiden Stirnflächen (13) eine flache Verbindungsausnehmung vorgesehen ist, die im wesentlichen parallel zur Stirnfläche verläuft.

3. Verfahren nach Anspruch 1,
dadurch gekennzeichnet, daß eine im wesentlichen U-förmig gestaltete Ausnehmung (14) in jeder der beiden Stirnflächen (13) angeordnet ist.

4. Verfahren nach den Ansprüchen 1 oder 2,
dadurch gekennzeichnet, daß eine Vielzahl schmaler Ausnehmungen in das Plattenmaterial von den Stirnseiten her durch Stifte eingepreßt wird.

5. Verfahren nach Anspruch 4,
dadurch gekennzeichnet, daß eine Vielzahl von Ausnehmungen in die Stirnflächen zur Verbindung der Plattenelemente durch wenigstens eine mit Stiften versehene Rolle eingepreßt wird.

6. Verfahren nach einem der vorhergehenden Ansprüche,
dadurch gekennzeichnet, daß die Verbindung (9) zwischen zwei Plattenelementen (2) in einer Form (5) hergestellt wird und daß benachbart zu der Form (5) ein Ausfüllkleber (17) in die Verbindung (9) über einen Einspritzkanal (15, 16) eingespritzt wird, der vorher in eines der Plattenelemente (2) eingebohrt wurde.

7. Vorrichtung zur Durchführung des Verfahrens nach einem der vorhergehenden Ansprüche mit einer Fördervorrichtung für die zu verbindenden Platten (2) und für eine Reihe von verbundenen Platten, wobei die Fördereinrichtung mit einer Form (5) versehen ist, um die Verbindung (9) zwischen zwei Plattenelementen (2) aufzunehmen, die sich stirnseitig (13) gegenüberliegen und mit einer Einspritzeinrichtung (21) zum Einspritzen eines Ausfüllklebers (17) in die Verbindung (9) hinein und mit einer Schneidvorrichtung (12), um Platten vorbestimmter Länge von der Plattenreihe abzutrennen,
gekennzeichnet durch Ausnehmungsmittel, um in jeder der zu verbindenden Stirnflächen (13) mehrere Verankerungsausnehmungen (14) anzubringen, die sich von diesen Stirnflächen über eine gewisse Tiefe in das Holz hinein erstrecken, und die miteinander durch wenigstens eine weniger tiefe Verbindungsausnehmung verbunden werden, die in wenigstens einer der beiden zu verbindenden Stirnflächen (13) angeordnet sind, die einander gegenüberliegen, wobei die Verankerungsausnehmungen (14) im gegenseitigen Abstand zueinander angeordnete Verbindungen mit der wenigstens einen weniger tiefen Verbindungsausnehmung aufweisen.

8. Platte (11), die unter Benutzung des Verfahrens gemäß einem oder mehreren der vorhergehenden Ansprüche 1 bis 6 hergestellt ist,
dadurch gekennzeichnet, daß sie aus wenigstens zwei Plattenteilen besteht, die miteinander durch eine Verbindung verbunden sind, wobei in jeder der beiden aufeinander hin gerichteten Stirnflächen (13) der Verbindung mehrere Verankerungsausnehmungen (14) angeordnet sind, die sich von diesen Stirnflächen bis zu einer gewissen Tiefe in das Holz hinein erstrecken und die miteinander über wenigstens eine weniger tiefe Verbindungsausnehmung verbunden sind, die in wenigstens einer der beiden gegenüberliegenden Stirnflächen (13) angeordnet sind, und wobei ein Kleber (17) zwischen diese Stirnflächen (13) und in diese Ausnehmungen (14) eingespritzt ist, wobei die Verankerungsausnehmungen (14) im gegenseitigen Abstand angeordnete Verbindungen mit der wenigstens einen weniger tiefen Verbindungsausnehmung aufweisen.

## Revendications

1. Procédé pour fabriquer des panneaux (11) de longueur prédéterminée, selon lequel une chaîne continue de panneaux (10) est constituée en reliant des éléments de panneau (2) les uns aux autres à des jointures (9), au moins deux éléments de panneau (2) maintenus sensiblement dans le même plan sont reliés l'un à l'autre avec introduction d'adhésif entre leurs surfaces d'extrémité (13), dans au moins une des surfaces (13) à joindre au moins une cavité d'ancrage (14) est agencée qui s'étend de ces surfaces à une certaine profondeur dans le bois, lesdites surfaces (13) sont opposées l'une à l'autre et un adhésif (17) est injecté entre ces surfaces (13) et des panneaux (11) de longueur prédéterminée sont séparés de ladite chaîne de panneaux (10),
caractérisé en ce que dans chacune des deux surfaces (13) à joindre une pluralité de cavités d'ancrage (14) sont agencées qui s'étendent de ces surfaces à une certaine profondeur dans le bois et sont reliées l'une à l'autre au moyen d'au moins une cavité de liaison moins profonde agencée dans au moins une des deux surfaces (13) devant se faire face, et en ce qu'un adhésif (17) est injecté entre ces surfaces (13) et dans les cavités (14), lesdites cavités d'ancrage (14) ayant des liens mutuellement espacés avec ladite au moins une cavité de liaison moins profonde.

2. Procédé selon la revendication 1, caractérisé en ce que dans au moins une des deux surfaces d'extrémité (13) est aménagée une cavité d'assemblage peu profonde, plate qui s'étend de façon substantiellement parallèle à la surface d'extrémité.

3. Procédé selon la revendication 1, caractérisé en ce qu'une cavité substantiellement en forme de U (14) est aménagée dans chacune des deux surfaces d'extrémité (13).

4. Procédé selon la revendication 1 ou 2, caractérisé en ce qu'une pluralité de cavités étroites est pressée dans le matériau du panneau depuis les côtés d'extrémité supérieurs au moyen de goupilles.

5. Procédé selon la revendication 4, caractérisé en ce qu'un grand nombre de cavités sont pressées dans les surfaces pour l'assemblage des éléments de panneau au moyen d'au moins un rouleau pourvu de goupilles.

6. Procédé selon l'une quelconque des revendications précédentes, caractérisé en ce que la jointure (9) entre les deux éléments de panneau (2) pour l'assemblage est reçue dans un moule (5) et en ce que, adjacent au moule (5), de l'adhésif de remplissage (17) est injecté dans la jointure (9) par l'intermédiaire d'un canal d'injection (15, 16) creusé auparavant dans un des éléments de panneau (2).

7. Dispositif pour exécuter le procédé selon l'une quelconque des revendications précédentes, comprenant une chaîne d'assemblage pour des panneaux (2) à assembler et pour une chaîne de panneaux assemblés, ladite chaîne d'assemblage étant pourvue d'un moule (5) pour recevoir la jointure (9) entre deux éléments de panneaux (2) avec des surfaces d'extrémité (13) se faisant face mutuellement et avec des moyens d'injection (21) pour injecter un adhésif de remplissage (17) dans la jointure (9) et comprenant des moyens de coupe (12) pour couper des panneaux à une longueur prédéterminée à partir de ladite chaîne,
caractérisé par des moyens de cavité pour agencer dans chacune des deux surfaces (13) à joindre une pluralité de cavités d'ancrage (14) qui s'étendent de ces surfaces à une certaine profondeur dans le bois et qui sont reliées mutuellement par des moyens d'au moins une cavité de liaison moins profonde agencée dans au moins une des surfaces (13) se faisant face, lesdites cavités d'ancrage (14) ayant des liens mutuellement espacés avec ladite au moins une cavité de liaison moins profonde.

8. Panneau (11) fabriqué en utilisant le procédé d'une ou plus des revendications précédentes 1-6,
caractérisé en ce qu'il est composé d'au moins deux parties de panneau reliées l'une à l'autre par une jointure, où dans chacune des deux surfaces (13) de la jointure se faisant face une pluralité de cavités d'ancrage (14) est disposée, cavités qui s'étendent de ces surfaces à une certaine profondeur dans le bois et qui sont reliées l'une à l'autre au moyen d'au moins une cavité de liaison moins profonde disposée dans au moins une des deux surfaces (13) se faisant face, et où un adhésif (17) est injecté entre ces surfaces (13) et dans les cavités (14), où lesdites cavités d'ancrage (14) ont des liens mutuellement espacés avec ladite au moins une cavité de liaison moins profonde.
